Europäisches Patentamt

(19) European Patent Office

Office européen des brevets

(11) Publication number: **0 146 734**
**B1**

(12) **EUROPEAN PATENT SPECIFICATION**

(45) Date of publication of patent specification: 22.06.88

(21) Application number: **84113269.9**

(22) Date of filing: **05.11.84**

(51) Int. Cl.⁴: **B 60 T 8/26,** B 60 T 11/34, B 60 T 11/20

(54) Master cylinder and proportioning valve assembly.

(30) Priority: **01.12.83 US 556814**

(43) Date of publication of application:
**03.07.85 Bulletin 85/27**

(45) Publication of the grant of the patent:
**22.06.88 Bulletin 88/25**

(84) Designated Contracting States:
**DE FR GB IT**

(56) References cited:
**DE-A-3 310 082**
**FR-A-2 253 653**
**GB-A-1 417 023**
**GB-A-1 435 854**
**GB-A-2 004 339**
**GB-A-2 025 550**
**GB-A-2 025 551**
**GB-A-2 042 662**
**GB-A-2 052 659**

(73) Proprietor: **ALLIED CORPORATION**
**Columbia Road and Park Avenue P.O. Box 2245R (Law Dept.)**
**Morristown New Jersey 07960 (US)**

(72) Inventor: **Fulmer, Keith H.**
**15688 Kern Road**
**Mishawaka Indiana 46544 (US)**

(74) Representative: **Brullé, Jean et al**
**Division Technique Service Brevets Bendix Europe 126, rue de Stalingrad**
**F-93700 Drancy (FR)**

Courier Press, Leamington Spa, England.

## 0 146 734

**Description**

This invention relates to a master cylinder and proportioning valve assembly wherein fluid pressure is communicated from the master cylinder to a brake circuit via the proportioning valve assembly.

In United States Patent US—A—4,213,655 (Brademeyer), issued July 22, 1980, a screw-in proportioning valve assembly is connected to a master cylinder housing via an outlet port so that the proportioning valve assembly is coupled to the master cylinder as a modular unit. Therefore, the master cylinder and proportioning valve can be inventoried and assembled as a unitary package. However, if a proportioning valve assembly as described in the above patent is used in a conventional front-rear brake system, it is possible for the proportioning valve to function and reduce fluid pressure to the rear brakes even though the front brakes have failed. This situation is not desirable in the failure mode as full braking pressure should be communicated to the rear brakes when the front brakes are inoperable.

To avoid the above problems during the failure mode, the present invention provides a master cylinder and proportioning valve assembly comprising a housing defining a bore movably receiving a pair of pistons which form with the housing a pair of pressure chambers communicating with respective brake circuits via outlet ports, the proportioning valve assembly being connected with the housing via one of the outlet ports to proportion fluid pressure communicated from one of the pressure chambers to its associated brake circuit during braking, and said proportioning valve assembly being mechanically connected with one of said pistons through the intermediary of a stem slidably engaging a skirt of said one piston so as to be responsive to its movement beyond a predetermined amount to create a bypass condition wherein said proportioning valve assembly is prevented from proportioning the fluid pressure communicated from the one pressure chamber to its associated brake circuit characterized in that said one outlet port communicates with said housing bore via a pair of openings, and said stem extends through one of said openings while the other opening provides secondary fluid communication between said housing bore and said one outlet port so that air may be bled from the bore through the other opening and one outlet port.

It is an advantage of the present invention that the proportioning valve assembly is provided with a simple connection with the one piston to control operation of the proportioning valve in response to a failure mode.

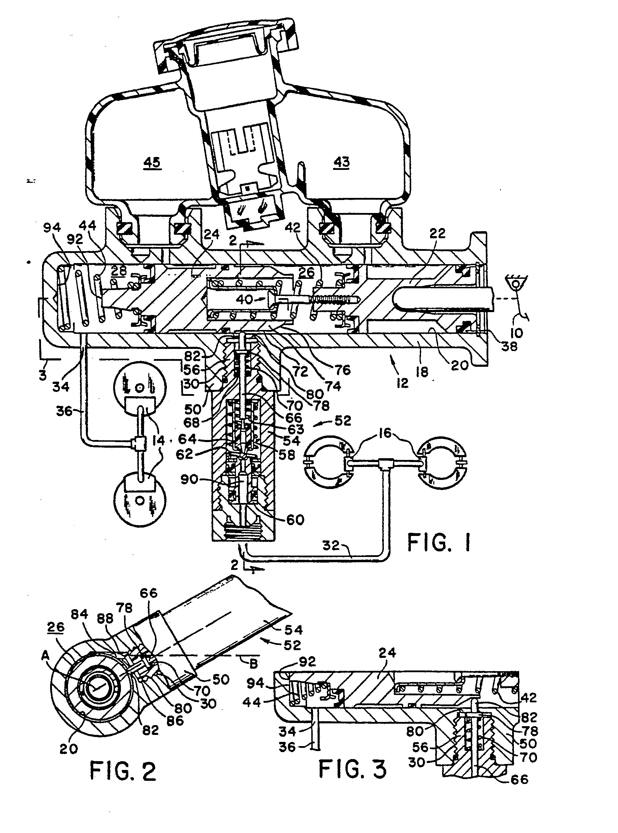

In the drawings, Figure 1 shows a brake system with a master cylinder and proportioning valve assembly illustrated in cross section. Figure 2 is a cross sectional view taken along line 2—2 of Figure 1, and Figure 3 is a view of the circumscribed portion in Figure 1 when a failure mode occurs.

The brake system in Figure 1 shows a brake pedal 10 coupled to a master cylinder 12 to generate fluid pressure therein and communicate the same to a pair of front brakes 14 and a pair of rear brakes 16. The master cylinder 12 defines a housing 18 with a bore 20 movably receiving a first piston 22 and a second piston 24. The first piston 22 cooperates with the second piston 24 to substantially define a first chamber 26, while the second piston 24 cooperates with the housing 18 to substantially define a second chamber 28. The first chamber 26 communicates with the rear brakes 16 via outlet port 30 and conduit 32 and the second chamber 28 communicates with the front brakes 14 via outlet port 34 and conduit 36. In a conventional manner, the pistons 22 and 24 are movable within the bore during braking to generate fluid pressure in the chambers 26 and 28 and communicate the same to respective brakes 16 and 14.

During braking, the pedal 10 is pivoted to move piston 22 toward piston 24 and close chamber 26 to the reservoir 43. The spring 42 is collapsed to bias piston 24 to also close chamber 28 to the reservoir 45 so that fluid pressure is generated in the contracting chambers 26 and 28. The fluid pressure in chamber 28 is communicated directly to the outlet port 34, the conduit 36 and the front brakes 14. The fluid pressure in chamber 26 is communicated to the outlet port 30 via opening 84 and opening 82 as the end of stem 66 is slotted to permit fluid communication through opening 82. The shoulder 78 of stem 66 is also slotted to provide fluid communication past the shoulder 78 and the shoulder 68 so that fluid pressure is communicated to the differential area piston 60 and via an opening 90 in the differential area piston 60 to the conduit 32 and rear brakes 16. As the piston 24 moves away from piston 22, the surface 72 slidably engages the end of stem 66 to maintain the latter in its operative position as shown in Figure 1. Fluid pressure communicated to the stepped bore 58 acts against a small diameter section of piston 60 and against a large diameter section of piston 60 to bias the latter toward the poppet 64. When the fluid pressure in the stepped bore 58 reaches a predetermined value, the piston 60 is movable toward the poppet against the spring 62 so that the poppet reduces fluid communication through opening 90 to proportion fluid communication to the rear brakes 16.

A snap ring 38 is fixedly disposed at an open end of the bore 20 to define a rest position for the first piston 22. A top hat assembly 40 between the pistons 22 and 24 defines a rest position for the second piston 24. Springs 42 and 44 cooperate with the pistons and housing to bias the pistons to their rest positions. A reservoir having two compartments 43 and 45 is coupled to the housing 18 to carry fluid for selective communication to the bore 20.

The housing 18 forms an outwardly extending projection 50 defining outlet port 30. A proportioning valve assembly 52 is threadably coupled to the projection 50 and the conduit 32.

The proportioning valve assembly comprises a plug 54 with a threaded end 56 coupled to a threaded wall of outlet port 30. The plug 54 forms a stepped bore 58 to movably receive a differential area piston 60, a spring 62 and a poppet 64. A spring 63 biases the poppet 64 to an extended position adjacent the differential area piston 60. The spring 62 opposes movement of the differential area piston 60. The poppet 64 includes a stem 66 extending from the poppet 64 through the threaded end 56 to a position inside the bore 20 in engagement with the piston 24. The stepped bore 58 forms a shoulder 68 at the threaded end so that a spring 70 abuts the shoulder 68 and biases the stem 66 in the direction of the piston 24. In the rest position shown in Figure 1, the stem 66 engages a first surface 72 formed by a skirt 74. The first surface extends from the stem to a second tapered surface 76 so that movement of the piston retains the stem stationary until the second surface comes into engagement with the stem 66. At this time, the second surface 76 is movable relative to the stem 66 to permit the latter to move further into the bore 20 until a shoulder 78 on the stem is engageable with a shoulder 80 on the projection 50, as shown in Figure 3.

Turning to Figure 2, the outlet port 30 includes a first opening 82 with an axis A intersecting one axis of the bore 20 and a second opening 84 with an axis B substantially tangential to a wall of bore 20. The axis A of the first opening 82 is coaxial with the axis of the stepped bore 58 and the axis B of the second opening 84 extends through an open end of the outlet port 30. Consequently, both openings 82 and 84 are accessible from the open end of port 30 for drilling the same. A first wall 86 of outlet port 30 extends to shoulder 80 to define an edge 88 intersecting the axis B of opening 84 so that the edge 88 sets the location of axis B. With the opening 84 disposed at the top of bore 20, it is possible to bleed air from the bore 20 while still retaining a perpendicular mounting for the stem 66 against the piston 24.

So long as the pressure chamber 28 and its associated fluid lines to the front brakes 14 remains closed, the build up of fluid pressure in chamber 28 will prevent piston 24 from completely collapsing spring 44. Therefore, during normal braking the piston 24 moves through a limited distance to retain surface 72 in slidable engagement with stem 66. The proportioning valve assembly 52 is pressure responsive to selectively proportion communication of fluid pressure to the rear brakes 16.

In the event that the front brakes 14 or conduit 34 fail as a result of a leak, the piston 24 will move with the piston 22 during braking and completely collapse spring 28 until an end face 92 of piston 24 abuts an end wall 94 of housing 18. When the end face 92 approaches the end wall 94, the piston 24 positions the second tapered surface 76 in sliding engagement with the stem 66. The spring 70 biases the stem 66 to move further into the bore 20 along surface 76. The poppet 64 moves with the stem 66 away from the differential area piston 60. Thereafter, when fluid pressure in the stepped bore 58 moves the differential area piston toward the poppet, the poppet will be displaced toward the piston 24 to provide for free flow of fluid pressure from the chamber 26 to the conduit 32 in the failure mode. When braking is terminated, the piston 24 will return to its rest position as shown in Figure 1 so that the tapered second surface will push the stem and poppet in the direction of the differential area piston until the stem engages the first surface 72 of the piston 24.

As a result of the above description, the proportioning valve assembly is position responsive to movement of the piston 24 to define a bypass failure mode wherein the proportioning valve assembly is rendered inoperable. The proportioning valve assembly also cooperates with the piston to reestablish a normal operating position for the proportioning valve assembly when braking is terminated. Therefore, when the failure is corrected, the proportioning valve assembly will be in its normal operating position to control fluid communication to the rear brakes as a function of the fluid pressure generated by the master cylinder.

**Claims**

1. A master cylinder and proportioning valve assembly comprising a housing (18) defining a bore (20) movably receiving a pair of pistons (22, 24) which form with the housing a pair of pressure chambers (26, 28) communicating with respective brake circuits (32, 36) via outlet ports (30, 34), the proportioning valve assembly (52) being connected with the housing (18) via one (30) of the outlet ports to proportion fluid pressure communicated from one (26) of the pressure chambers to its associated brake circuit (32) during braking, and said proportioning valve assembly (52) being mechanically connected with one (24) of said pistons through the intermediary of a stem (66) slidably engaging a skirt (74) of said one piston (24) so as to be responsive to its movement beyond a predetermined amount to create a bypass condition wherein said proportioning valve assembly (52) is prevented from proportioning the fluid pressure communicated from the one pressure chamber (26) to its associated brake circuit (32), characterized in that said one outlet port (30) communicates with said housing bore via a pair of openings (82, 84), and said stem (66) extends through one (82) of said openings while the other opening (84) provides secondary fluid communication between said housing bore (20) and said one outlet port (30) so that air may be bled from the bore (20) through the other opening (84) and said one outlet port (30).

2. A master cylinder and proportioning valve assembly according to claim 1, characterized in that said one opening (82) forms an axis (A) concentrically orientated relative to an axis for said one outlet port (30) and said other opening (84) forms an axis (B) angularly disposed relative to said outlet port axis and extending outwardly through an open end of said outlet port to permit said bleeding of air via said one outlet port (30).

3. A master cylinder and proportioning valve assembly according to Claim 1 or 2, characterized in that said outlet port (30) forms a shoulder (80) extending transversely outwardly from said one opening to a wall (86) cooperating with said proportioning valve assembly, said shoulder (80) intersecting said wall at an edge (88) and said other opening axis (B) intersecting said edge (88).

4. A master cylinder and proportioning valve assembly according to Claim 2 or 3, characterized in that said opening (82) defines an axis (A) substantially intersecting an axis for said housing bore and said other opening (84) defines an axis (B) substantially tangential to a wall for said housing bore (20).

## Patentansprüche

1. Hauptzylinder und Zumeßventilanordnung mit einem Gehäuse (18), das eine Bohrung (20) bildet, die zwei Kolben (22, 24) beweglich aufnimmt, die zusammen mit dem Gehäuse zwei Druckkammern (26, 28) bilden, die mit jeweiligen Bremskreisen (32, 36) über Auslässe (30, 34) verbunden sind, wobei die Zumeßventilanordnung (52) mit dem Gehäuse (18) über einen (30) der Auslässe verbunden ist, um den Strömungsmitteldruck, der während des Bremsvorgangs von einer (26) der Druckkammern dem zugeordneten Bremskreis (32) zugeführt wird, zu bemessen, und wobei die Zumeßventilanordnung (52) mit einem (24) der Kolben über einen dazwischenliegenden Schaft (66) mechanisch verbunden ist, der an einem Mantel (74) des einen Kolbens (24) gleitend anliegt, um auf seine Bewegung über einen vorbestimmten Betrag hinaus anzusprechen, damit ein Bypasszustand hergestellt wird, bei dem die Zumeßventilanordnung (52) daran gehindert wird, den von der einen Druckkammer (26) an den zugeordneten Bremskreis (32) übertragenen Strömungsmitteldruck zu bemessen, dadurch gekennzeichnet, daß der eine Auslaß (30) mit der Gehäuseborhung über zwei Öffnungen (82, 84) verbunden ist und daß der Schaft (66) durch eine (82) der Öffnungen verläuft, während die andere Öffnung (84) eine zweite Strömungsmittelverbindung zwischen der Gehäusebohrung (20) und dem einen Auslaß (30) herstellt, damit Luft aus der Bohrung (20) durch die andere Öffnung (84) und den einen Auslaß (30) abströmen kann.

2. Hauptzylinder und Zumeßventilanordnung nach Anspruch 1, dadurch gekennzeichnet, daß die eine Öffnung (82) eine Achse (A) bildet, die bezüglich einer Achse für den einen Auslaß (30) konzentrisch ausgerichtet ist, und daß die andere Öffnung (84) eine Achse (B) bildet, die bezüglich der besagten Auslaßachse im Winkel angeordnet ist und durch ein offenes Ende des besagten Auslasses nach außen verläuft, um das Abströmen von Luft durch den einen Auslaß (30) zu gestatten.

3. Hauptzylinder und Zumeßventilanordnung nach Anspruch 1 oder 2, dadurch gekennzeichnet, daß der Auslaß (30) eine Schulter (80) bildet, die von der besagten einen Öffnung quer nach außen zu einer Wand (86) verläuft, die mit der Zumeßventilanordnung zusammenwirkt, wobei die Schulter (80) die Wand an einer Kante (88) schneidet und die Achse (B) der anderen Öffnung die Kante (88) schneidet.

4. Hauptzylinder und Zumeßventilanordnung nach Anspruch 2 oder 3, dadurch gekennzeichnet, daß die Öffnung (82) eine Achse (A) definiert, die im wesentlichen eine Achse für die Gehäusebohrung schneidet, und daß die andere Öffnung (84) eine Achse (B) definiert, die im wesentlichen tangential zu einer Wand für die Gehäusebohrung (20) angeordnet ist.

## Revendications

1. Ensemble de maître-cylindere et de vanne proportionnelle, comprenant un carter (18) définissant un alésage (20) dans lequel peuvent se mouvoir une paire de pistons (22, 24) qui forment avec le carter, une paire de chambres de pression (26, 28) communiquant avec des circuits de freinage respectifs (32, 36) via des orifices de sortie (30, 34), l'ensemble de vanne proportionnelle (52) étant raccordé au carter (18) via un premier (30) des orifices de sortie afin de proportionner la pression de fluide communiquée depuis une première (26) des chambres de pression à son circuit de freinage associé (32) pendant le freinage, et ledit ensemble de vanne proportionnelle (52) étant mécaniquement relié à un premier (24) desdits pistons par l'intermédiaire d'une tige (86) glissant sur une jupe (74) dudit premier piston (24) du façon à réagir à son mouvement au-delà d'une valeur prédéterminée pour créer une situation de by-pass dans laquelle ladit ensemble de vanne proportionnelle (52) est empêché de proportionner la pression de fluide communiquée depuis la première chambre de pression (26) à son circuit de freinage associé (32), caractérisé en ce que ledit premier orifice de sortie (30) communique avec ledit alésage du carter via une paire d'ouvertures (82, 84) et en ce que ladite tige (66) s'étend à travers une première (82) desdites ouvertures tandis que l'autre ouverture (84) assure une communication secondaire de fluide entre ledit alésage (20) du carter et ledit premier orifice de sortie (30) de sorte que de l'air puisse être soutiré de l'alésage (20) à travers l'autre ouverture (84) et ledit premier orifice de sortie (30).

2. Ensemble de maître-cylindre et de vanne proportionnelle suivant la revendication 1, caractérisé en ce que ladite première ouverture (82) forme un axe (A) orienté concentriquement par rapport à un aux dudit premier orifice de sortie (30) et en ce que ladite autre ouverture (84) forme un axe (B) disposé angulairement par rapport audit axe de l'orfice de sortie et s'étendant vers l'extérieur à travers une extrémité ouverte dudit orifice de sortie pour permettre ledit soutirage d'air via ledit premier orifice de sortie (30).

3. Ensemble de maître-cylindre et de vanne proportionnelle suivant la revendication 1 ou 2, caractérisé en ce que ledit orifice de sortie (30)sforme un épaulement (80) s'étendant transversalement vers l'extérieur depuis ladite première ouverture jusqu'à une paroi (86) coopérant avec ledit ensemble de vanne proportionnelle, ledit épaulement (80) coupant ladite paroi suivant une arête (88) et ledit axe (B) de l'autre ouverture coupant ladite arête (88).

4. Ensemble de maître-cylindre et de vanne proportionnelle suivant la revendication 2 ou 3, caractérisé en ce que ladite ouverture (82) définit un axe (A) coupant substantiellement un axe dudit alésage du carter et en ce que ladite autre ouverture (84) définit un axe (B) substantiellement tangent à une paroi dudit alésage (20) du carter.

FIG. I

FIG. 2

FIG. 3